# EUROPÄISCHE PATENTANMELDUNG

(11) **EP 2 233 633 A1**
(43) Veröffentlichungstag der Anmeldung: **29.09.2010**
(21) Anmeldenummer: 09004522.0
(22) Anmeldetag: 28.03.2009
(51) Int. Cl.: D06M 15/233, D06M 15/248, D06M 15/263, C08F 220/68

(54) **Fluorfreie wässrige Dispersion für die Behandlung von textilen Flächengebilden**

(71) Anmelder: Huntsman Textile Effects (Germany) GmbH, 86462 Langweid a. Lech (DE)
(72) Erfinder: Fuchs, Andreas, Dr., 81245 München (DE); Artner, Wilhelm, 86568 Motzenhofen (DE); Oberlaender, Barbara, 86368 Gersthofen (DE)

(57) **Zusammenfassung**

Wässrige Dispersionen werden beschrieben, welche ein spezielles Copolymer auf Acrylatbasis, ein spezielles Paraffinwachs und einen oder mehrere Dispergatoren enthalten. Die Dispersionen besitzen hohe Stabilität und eignen sich für die Behandlung von textilen Flächengebilden, denen hierdurch ausgezeichnete wasserabweisende Eigenschaften verliehen werden.

## Beschreibung

Die Erfindung betrifft wässrige Dispersionen, welche Paraffinwachs, Copolymere und Dispergatoren enthalten. Sie betrifft ferner ein Verfahren zur Behandlung textiler Flächengebilde, bei dem solche Dispersionen auf die textilen Flächengebilde aufgebracht werden.

Es ist bekannt, textile Flächengebilde wie Gewebe, Wirkware oder Vliese (non-wovens) mit wässrigen Dispersionen zu behandeln, um ihnen erwünschte Eigenschaften zu vermitteln. Eine solche erwünschte Eigenschaft ist beispielsweise ein wasserabweisender Effekt. Zur Erzielung wasserabweisender Eigenschaften auf Textilien werden unter anderem wässrige Dispersionen von Fluor enthaltenden Produkten verwendet. Solche Produkte sind jedoch teuer und können umweltschädliche Einflüsse mit sich bringen. Aus dem Stand der Technik sind auch wässrige Systeme bekannt, die n-Paraffin und Acrylpolymere enthalten. Dies ist beispielsweise beschrieben in der EP 1 424 433 B1 und im Abstract zur JP 2006/83 276 A2 sowie im Abstract zur JP 2005/105 042 A2 und zur JP 2000/248 140 A2. Die genannte EP-B1 beschreibt Systeme, welche C₁- bis C₁₂-Ester von (Meth-)Acrylsäure enthalten. Diese Ester müssen außerdem als Monomerbaustein Vinylester bestimmter Säuren enthalten. Es hat sich gezeigt, dass mit den Produkten dieser EP-Schrift oder der beiden JP-Abstracts kein optimaler wasserabweisender Effekt auf Textilien zu erzielen ist.
Der nachfolgend beschriebenen Erfindung lag die Aufgabe zugrunde, Zusammensetzungen zur Verfügung zu stellen, welche hohe Stabilität, auch nach längerer Lagerung, besitzen, welche keine Fluorverbindungen enthalten und mit welchen sich hervorragende wasserabweisende Eigenschaften auf textilen Flächengebilden wie Geweben, Wirkwaren oder Vliesen (non-wovens) erzielen lassen, sowie ein Verfahren zur Verfügung zu stellen, mit dem sich hervorragende wasserabweisende Eigenschaften auf textilen Flächengebilden erzielen lassen.

Die Aufgabe wurde gelöst durch eine wässrige Dispersion, welche kein Fluor und keine N-Methylolverbindung enthält und welche mindestens die Komponenten A) bis D) enthält, wobei
Komponente A) ein Copolymer ist, das ausschließlich aus folgenden Monomerbausteinen aufgebaut ist:
a) ein Acrylat oder Methacrylat eines Alkohols, der 10 bis 24 C-Atome, vorzugsweise 12 bis 24 und besonders bevorzugt 16 bis 22 C-Atome enthält, oder ein Gemisch solcher Acrylate und Methacrylate
b) Styrol oder α-Methyl-Styrol
c) Vinylidenchlorid und/oder Vinylchlorid
d) gegebenenfalls 3-Chloro-2-hydroxypropyl(meth-)acrylat und/oder (Meth-)Acrylsäureglycidylester
wobei
Komponente B) ein Paraffinwachs mit einem Schmelzbereich von 58°C bis 80°C ist, vorzugsweise von 65°C - 75°C
wobei
Komponente C) ein Dispergator oder ein Gemisch von Dispergatoren ist,
vorzugsweise ein kationischer Dispergator oder ein Gemisch aus einem kationischen und einem nichtionogenen Dispergator, und
wobei Komponente D) Wasser ist
und durch ein Verfahren zur Behandlung textiler Flächengebilde, **dadurch gekennzeichnet, dass** man auf die Flächengebilde eine Dispersion der hier beschriebenen Art aufbringt.

Die erfindungsgemäßen Zusammensetzungen sind wässrige Dispersionen. Sie enthalten keine Fluorverbindungen, was sich positiv auf Umweltaspekte und auf die Kosten der Produkte auswirkt. Ferner enthalten sie keine N-Methylolverbindungen. N-CH₂OH-Verbindungen weisen den Nachteil auf, dass sie, vor allem bei erhöhten Temperaturen, Formaldehyd in unerwünschten Mengen in die Umgebungsatmosphäre freisetzen können.
Die erfindungsgemäßen Produkte sind wässrige Dispersionen. Sie enthalten als Komponente C) einen Dispergator oder ein Gemisch von Dispergatoren, wodurch die Stabilität der Dispersion gewährleistet wird. Als Dispergatoren geeignet sind bekannte handelsübliche oberflächenaktive Produkte wie nichtionogene ethoxilierte Produkte, z.B. ethoxilierte Alkohole oder ethoxilierte Carbonsäuren. Bevorzugt als Komponente C) sind handelsübliche kationaktive Produkte wie quaternäre Ammoniumsalze oder Dispergatorgemische, welche solche kationaktiven Produkte und nichtionogene Produkte wie z.B. Mono- oder Dipropylenglykol enthalten. Als kationaktiver Dispergator ist beispielsweise geeignet das Produkt Ethoquad HT/25 der Firma AKZO Nobel. In Dispergatorgemischen beträgt zweckmäßigerweise der Anteil an kationaktivem Dispergator ca. 20 - 100 Gew%, bezogen auf die Gesamtmenge an Dispergatorgemisch.
Die erfindungsgemäßen Dispersionen enthalten vorzugsweise 0,5 bis 3 Gew% an Dispergator oder Dispergatorgemisch (Komponente C)).
Die erfindungsgemäßen wässrigen Dispersionen besitzen auf Grund ihrer Zusammensetzung eine sehr hohe Stabilität.

Die in erfindungsgemäßen Dispersionen enthaltene Komponente A) ist ein Copolymer. Dieses ist ausschließlich aus den nachfolgend genannten Monomerbausteinen a) bis c) sowie gegebenenfalls zusätzlich d) aufgebaut, denn es wurde gefunden, dass der Einbau anderer Monomerbausteine das Effektniveau verschlechtert, was Dispersionsstabilität und/oder wasserabweisende Wirkung betrifft:
a) ein Acrylat oder Methacrylat eines Alkohols, der 10 bis 24 C-Atome, vorzugsweise 12 bis 24 und besonders bevorzugt 16 bis 22 C-Atome enthält, oder ein Gemisch solcher Acrylate und Methacrylate
b) Styrol oder α-Methyl-Styrol
c) Vinylidenchlorid und/oder Vinylchlorid
d) gegebenenfalls 3-Chloro-2-hydroxypropyl(meth-)acrylat und/oder (Meth-)Acrylsäureglycidylester
   Die für die Herstellung von Komponente A) der erfindungsgemäßen Dispersionen verwendeten Acrylate bzw. Methacrylate enthalten insbesondere keine Kohlenstoff-Kohlenstoff-Mehrfachbindungen in der Alkoholkomponente dieser Ester.

Monomerbaustein a) ist ein Ester aus Acrylsäure und/oder Methacrylsäure und einem Alkohol, der 12 bis 24, vorzugsweise 16 bis 22 Kohlenstoffatome enthält oder ein Gemisch solcher Ester. Bevorzugte Alkohole sind hierbei einwertige Alkohole. Als Monomerbaustein a) ist Behenylacrylat oder Behenylmethacrylat besonders gut geeignet. Die zugrunde liegenden Alkohole können linear aufgebaut sein oder gegebenenfalls eine verzweigte Alkylgruppe aufweisen.

Acrylate oder Methacrylate, welche als Monomerbaustein a) verwendet werden können, sind auf dem Markt erhältlich oder können nach allgemein bekannten Methoden hergestellt werden. Als Monomerbaustein a) ist ein Gemisch aus einem Acrylat und einem Methacrylat im Molverhältnis von etwa 1:1 sehr gut geeignet.
Monomerbaustein b) ist Styrol oder α-Methyl-Styrol und ist ebenfalls auf dem Markt erhältlich.
Monomerbaustein c) ist Vinylchlorid CH₂=CHCl oder Vinylidenchlorid CH₂=CCl₂. Auch diese Produkte sind auf dem Markt erhältlich.
Monomerbaustein d) ist nicht unbedingt in den Copolymeren erforderlich, die als Komponente A) verwendet werden können, kann jedoch gegebenenfalls zusätzlich eingebaut werden, um spezielle Effekte zu erzielen. Monomerbaustein d) ist 3-Chloro-2-hydroxypropyl(meth-)acrylat oder (Meth-)Acrylsäureglycidylester oder eine Mischung dieser beiden Monomeren.

Copolymere, welche besonders gut als Komponente A) geeignet sind, enthalten die Monomerbausteine a) bis d) bevorzugt in folgenden Mengen:
25 bis 60 Gew%, vorzugsweise 35 bis 50 Gew% an Monomerbaustein a)
8 bis 40 Gew%, vorzugsweise 15 bis 30 Gew% an Monomerbaustein b)
10 bis 30 Gew%, vorzugsweise 15 bis 25 Gew% an Monomerbaustein c)
0 bis 10 Gew% an Monomerbaustein d)

Die als Komponente A) verwendbaren Copolymeren können aus den Monomerbausteinen a) bis c) sowie gegebenenfalls zusätzlich Monomerbaustein d) nach allgemein bekannten Methoden hergestellt werden. Üblicherweise führt man die Copolymerisation als radikalische Copolymerisation unter Verwendung eines Polymerisationskatalysators durch. Als Katalysatoren für die radikalischen Polymerisationen sind allgemein bekannte handelsübliche Produkte verwendbar, welche als radikalische Initiatoren dienen. Im Rahmen der vorliegenden Erfindung sind als Katalysatoren unter anderem Azoverbindungen geeignet, wie z.B. Vazo 56 oder Wako V-50 (CAS-Nr. 2997-92-4) der Firma DuPont bzw. WAKO Pure Chemical Industries.

Die Menge an Polymerisationskatalysator, die eingesetzt wird, kann im üblichen bekannten Bereich liegen. Zweckmäßigerweise beträgt sie 2,5 bis 5 Gew%, bezogen auf die Mischung der Monomerbausteine.
Zur Erzielung der positiven Eigenschaften erfindungsgemäßer Dispersionen ist es wesentlich, dass die drei Monomerbausteine a) bis c) in dem Copolymeren anwesend sind. Gegebenenfalls kann noch Monomerbaustein d) hinzukommen; jedoch dürfen keine anderen Monomerbausteine als die genannten anwesend sein, da sonst eine Verschlechterung der Effekte auftreten würde.

Fehlt Monomerbaustein a) so ist der wasserabweisende Effekt zu wenig ausgeprägt Fehlt Monomerbaustein b) so ist ebenfalls der wasserabweisende Effekt nicht optimal Fehlt Monomerbaustein c) so ist der wasserabweisende Effekt weder im Niveau zufrieden stellend noch in seiner Permanenz

In Versuchen außerhalb des Schutzbereichs der beanspruchten Erfindung wurde der Einbau weiterer Monomerbausteine in die Copolymeren untersucht, z.B. der Einbau von Hydroxyethyl(meth-)acrylat.

Komponente B) erfindungsgemäßer Dispersionen ist ein Paraffinwachs mit einem Schmelzbereich von 58°C bis 80°C, vorzugsweise von 65°C - 75°C. Paraffinwachse, welche einen Schmelzbereich außerhalb dieser Grenzen aufweisen, sind für erfindungsgemäße Dispersionen weniger gut oder gar nicht geeignet. Paraffinwachse mit niedrigerem Schmelzbereich als oben angegeben liefern nicht das gewünschte Effektniveau, was wasserabweisende Wirkung der mit den wässrigen Dispersionen behandelten Textilien betrifft. Außerdem führen sie zu verminderter Waschbeständigkeit ausgerüsteter Textilien. Paraffinwachse, deren Schmelzbereich höher liegt als oben angegeben, können zwar zu akzeptabler wasserabweisender Wirkung und Waschbeständigkeit der Textilien führen, sie bewirken jedoch erhöhte Viskosität der wässrigen Dispersionen, so dass diese Dispersionen technisch nicht mehr ausreichend handhabbar sind, außerdem ist dann die Herstellung der Dispersionen aufwendiger und schwieriger. Paraffinwachse sind bekannte Produkte, die in der chemischen Literatur beschrieben sind, z.B. in "Römpp Chemie-Lexikon, 9. Auflage, Georg-Thieme-Verlag, Stuttgart - New York, unter den Stichpunkten "Paraffin" und "Wachse"". Für die erfindungsgemäßen Dispersionen verwendbare Produkte, welche einen Schmelzbereich von 58°C bis 80°C besitzen, sind auf dem Markt erhältlich, z.B. ein Paraffin mit dem Schmelzbereich 68°C bis 74°C (CAS-Nr. 8002-74-2).

Komponente D) erfindungsgemäßer Dispersionen ist Wasser.

Die Herstellung erfindungsgemäßer wässriger Dispersionen kann nach allgemein üblichen Methoden erfolgen. Geeignet ist beispielsweise folgendes Verfahren: Man schmilzt das Paraffinwachs (Komponente B) in einem Gefäß auf. In einem zweiten Gefäß legt man einen Dispergator oder ein Dispergatorgemisch (Komponente C)) vor und gibt die Monomerbausteine a) und b) (Acrylat und Styrol oder Methylstyrol) und gegebenenfalls d) hinzu. Das erhaltene Gemisch dispergiert man in 85°C heißem Wasser unter Rühren. Diese Dispersion fügt man der Paraffinwachs-Schmelze unter intensivem Rühren (z.B. mittels Turrax-Gerät) hinzu. Nach der Zugabe wird noch einige Minuten weiter gerührt. Anschließend führt man eine Hochdruckdispergierung durch, z.B. bei 250 bar und 80 bis 85°C. Dann wird die Dispersion auf Raumtemperatur abgekühlt und man fügt Monomerbaustein c) (Vinylidenchlorid oder Vinylchlorid) und Polymerisationskatalysator, letzterer gelöst in Wasser, hinzu.
Nach mehreren Stunden Reaktionszeit bei ca. 50°C bis 60°C ist die Copolymerisation beendet und man erhält eine sehr stabile wässrige Dispersion.
Gegebenenfalls können der erhaltenen erfindungsgemäßen wässrigen Dispersion weitere Komponenten hinzugefügt werden, welche als Bestandteile von Textilbehandlungsmitteln bekannt sind. Um die Vorteile erfindungsgemäßer Dispersionen beizubehalten, nämlich ausgezeichnete Stabilität und Erzielung hervorragender wasserabweisender Eigenschaften auf Textilien, sollen jedoch keine Fluorverbindungen hinzugefügt werden und keine N-Methylolverbindungen, da letztere Formaldehyd freisetzen können.

Erfindungsgemäße Dispersionen enthalten die Komponenten A) bis D) vorzugsweise in folgenden Mengen:
3 bis 20 Gew% Komponente A), vorzugsweise 5 - 15 Gew%
8 bis 40 Gew% Komponente B), vorzugsweise 10 bis 35 Gew%.
0,5 bis 3 Gew% Komponente C),
55 bis 80 Gew% Wasser,
wobei das Gewichtsverhältnis von Komponente A) zu Komponente B) vorzugsweise im Bereich von 25 zu 70 bis 45 zu 70 liegt.

Bei Einhaltung dieser Mengenbereiche kommen die bereits genannten Vorteile der Dispersionen besonders ausgeprägt zur Geltung.

Erfindungsgemäße Dispersionen sind besonders gut dazu geeignet, textilen Flächengebilden wasserabweisende Eigenschaften zu verleihen. Hierzu werden die Textilien mit wässrigen Flotten behandelt, welche erfindungsgemäße Dispersionen enthalten. Sie können darüber hinaus noch weitere, aus dem Gebiet der Textilausrüstung bekannte, Produkte enthalten. Die so behandelten textilen Flächengebilde wie z.B. Gewebe können u.a. für folgende Endartikel verwendet werden: Damen- und Herren-Oberbekleidung.

Die Behandlung der textilen Flächengebilde kann nach allgemein üblichen Methoden durchgeführt werden, z.B. mittels Foulardierung, anschließender Trocknung und gegebenenfalls Kondensation z.B. bei Temperaturen im Bereich von 140° bis 190°C.
Die textilen Flächengebilde bestehen vorzugsweise aus Baumwolle, Polyester oder einem Baumwolle/Polyester-Gemisch. Sie sind im Normalfall Gewebe, Wirkware oder Vliese (non-wovens).

Die Erfindung wird nachfolgend durch Ausführungsbeispiele veranschaulicht.

### Beispiel 1 (erfindungsgemäß)

17,5 g Behenylacrylat, 17,5 g Behenylmethacrylat und 10,0 g Styrol wurden zu einer 85°C warmen Mischung aus 12,0 g Ethoquad HT/25 (ethoxiliertes quartäres Ammoniumsalz) und 30 g Dipropylenglykol in 450 g Wasser hinzugefügt und unter Rühren dispergiert. In einem separaten Gefäß wurden 105 g Paraffinwachs (Schmelzbereich 68 - 74°C) aufgeschmolzen. Die oben beschriebene Dispersion der Monomeren wurde zu dem geschmolzenen Paraffinwachs hinzugefügt. Anschließend wurde noch 3 Minuten dispergiert und dann eine Hochdruckdispergierung (250 bar, 85°C) durchgeführt, bis eine stabile Dispersion erhalten wurde. Nach Abkühlen auf Raumtemperatur wurden 20,0 g Vinylidenchlorid und Katalysatorlösung (2,5 g Wako V-50 in 15 g Wasser) hinzugefügt und die Mischung bei aufgesetztem Rückflusskühler 8 Stunden bei 55°C unter N₂ behandelt.
Man erzielt 550 g eines Produkts mit einem Wirkstoffgehalt von ca. 26 Gew% (nach Trocknung bei 120°C/90 Minuten bestimmt).

### Beispiel 2 (erfindungsgemäß)

Dieses Beispiel beschreibt die Behandlung textiler Flächengebilde mit einer Dispersion, die gemäß Beispiel 1 hergestellt wurde.

Behandelt wurde je ein Gewebe aus 100 % Baumwolle und aus 100 % Polyester. Das Baumwollgewebe wurde in einer Foulard-Apparatur mit einer Flotte behandelt, die 1 g/l 60 %ige Essigsäure, 20 g/l Cellulosevernetzer, 6 g/l Vernetzungskatalysator und 60 g/l der Dispersion von Beispiel 1 enthielt. Das Polyestergewebe wurde foulardiert mit einer Flotte, die 1 g/l 60 % Essigsäure und 60 g/l der Dispersion von Beispiel 1 enthielt. Nach Foulardierung wurden die Gewebe bei 110°C 10 Minuten lang getrocknet und dann bei 150°C 5 Minuten lang kondensiert.

Die gemäß Beispiel 2 erhaltenen ausgerüsteten Gewebe wurden folgenden Tests unterworfen:
a) Spraytest gemäß AATCC 22-2005, ISO 4920 (EN 24 920)
b) Bundesmann-Test gemäß DIN EN 29865, ISO 9865

Ergebnisse bei Baumwollgewebe:
a) Spraytest, Anfangswert 100 (3x bestimmt)
   nach 5 Wäschen bei 40°C: 3 x Note 100
b) Bundesmann, Anfangswerte 5; 3; 2 (15 % Wasseraufnahme)
   nach 5 Wäschen bei 40°C: 3; 2; 2 (22 % Wasseraufnahme)

Ergebnisse bei PES-Gewebe:
vor Wäsche nur geringer wasserabweisender Effekt, nach Wäsche ausgeprägter Effekt
   a) Spraytest, Anfangswerte: 80; 80; 80;
      nach 5 Wäschen (bei 40°C): 90 - 100; 90 - 100; 90 - 100
   b) Bundesmann: nach 5 Wäschen bei 40°C: 5; 4; 4 (1 % Wasseraufnahme)

### Beispiel 3 (nicht-erfindungsgemäßes Vergleichsbeispiel)

Bei der Behandlung von Geweben mit den Produkten gemäß Beispiel 3 wurde über Erhöhung der Einsatzmengen dem von Beispiel 1 abweichenden Wirksubstanzgehalt Rechnung getragen.

### Beispiel 3a:

Beispiel 1 wurde wiederholt, jedoch ohne Verwendung von Paraffinwachs. Hierbei wurde ein Produkt mit ca. 13 Gew% Wirkstoffgehalt (statt 26 % wie in Beispiel 1) erhalten. Das Produkt ergab bei Verwendung auf Baumwolle im Spraytest einen Wert von 80/80/70 (Dreifachbestimmung) ohne Wäsche und einen Wert von 0 nach 5 Wäschen.

Auf PES-Gewebe wurde beim Spraytest ein Anfangswert von 0 erhalten, nach 5 Wäschen wurden bei Dreifachbestimmung die Werte 50/50/50 erhalten.
Die Ergebnisse mit der Formulierung gemäß Beispiel 3a waren also deutlich schlechter als die von Beispiel 1.

### Beispiel 3b: (nicht erfindungsgemäß)

Beispiel 1 wurde wiederholt, jedoch ohne Verwendung von Vinylidenchlorid. Das erhaltene Produkt besaß einen Wirksubstanzgehalt von 24 Gew%. Die Behandlung von Baumwollgewebe mit diesem Produkt ergab im Spraytest 3 mal den Wert 100 (ohne Wäsche) und 3 mal den Wert 0 (nach 5 Wäschen). Im Bundesmann-Test wurden ohne Wäsche die Werte 3;1;1 bei 33 % Wasseraufnahme erhalten. Die Prüfung auf PES-Gewebe ergab im Spraytest 3 mal den Wert 0 (ohne Wäsche), nach 5 Wäschen wurde 3 mal der Wert 50 erhalten.
Mit dem Produkt gemäß Beispiel 3b wurden also schlechtere Ergebnisse erzielt als mit dem Produkt gemäß Beispiel 1.

## Patentansprüche

1. Wässrige Dispersion, welche kein Fluor und keine N-Methylolverbindung enthält und welche mindestens die Komponenten A) bis D) enthält, wobei
Komponente A) ein Copolymer ist, das ausschließlich aus folgenden Monomerbausteinen aufgebaut ist:
a) ein Acrylat oder Methacrylat eines Alkohols, der 10 bis 24 C-Atome, vorzugsweise 12 bis 24 und besonders bevorzugt 16 bis 22 C-Atome enthält, oder ein Gemisch solcher Acrylate und Methacrylate
b) Styrol oder α-Methyl-Styrol
c) Vinylidenchlorid und/oder Vinylchlorid
d) gegebenenfalls 3-Chloro-2-hydroxypropyl(meth-)acrylat und/oder (Meth-)Acrylsäureglycidylester
wobei
Komponente B) ein Paraffinwachs mit einem Schmelzbereich von 58°C bis 80°C ist, vorzugsweise von 65°C - 75°C
wobei
Komponente C) ein Dispergator oder ein Gemisch von Dispergatoren ist, vorzugsweise ein kationischer Dispergator oder ein Gemisch aus einem kationischen und einem nichtionogenen Dispergator, und
wobei Komponente D) Wasser ist.

2. Wässrige Dispersion nach Anspruch 1, **dadurch gekennzeichnet, dass** sie die Komponenten A) bis D) in folgenden Mengen enthält:
3 bis 20 Gew% Komponente A), vorzugsweise 5 - 15 Gew%,
8 bis 40 Gew% Komponente B), vorzugsweise 10 bis 35 Gew%,
0,5 bis 3 Gew% Komponente C),
55 bis 80 Gew% Wasser,
wobei das Gewichtsverhältnis von Komponente A) zu Komponente B) vorzugsweise im Bereich von 25 zu 70 bis 45 zu 70 liegt.

3. Wässrige Dispersion nach Anspruch 1 oder 2, **dadurch gekennzeichnet, dass** Komponente A) aus folgenden Mengen der Monomerbausteine a) bis d) aufgebaut ist:
25 bis 60 Gew%, vorzugsweise 35 bis 50 Gew% an Monomerbaustein a)
8 bis 40 Gew%, vorzugsweise 15 bis 30 Gew% an Monomerbaustein b)
10 bis 30 Gew%, vorzugsweise 15 bis 25 Gew% an Monomerbaustein c)
0 bis 10 Gew% an Monomerbaustein d)

4. Verfahren zur Behandlung textiler Flächengebilde, **dadurch gekennzeichnet, dass** man auf die Flächengebilde eine Dispersion gemäß einem der Ansprüche 1 bis 3 aufbringt.

5. Verfahren nach Anspruch 4, **dadurch gekennzeichnet, dass** die textilen Flächengebilde aus Baumwolle, Polyester oder einem Baumwolle/Polyester-Gemisch bestehen.
